# EUROPEAN PATENT SPECIFICATION

(11) **EP 2 675 116 B1**
(45) Date of publication and mention of the grant of the patent: **25.04.2018**
(21) Application number: 12745105.2
(22) Date of filing: 26.01.2012
(51) Int. Cl.: H04L 12/44, H04J 14/02, H04L 12/40, H04Q 11/00

(54) **COMMUNICATION SYSTEM, COMMUNICATION-LINE SWITCHING METHOD, AND MASTER STATION DEVICE**
KOMMUNIKATIONSSYSTEM, KOMMUNIKATIONSLEITUNGS-SCHALTMETHODE, UND MASTER-STATION
SYSTÈME DE COMMUNICATION, MÉTHODE DE COMMUTATION DE LIGNE DE COMMUNICATION ET STATION MAÎTRE

(30) Priority: 08.02.2011 JP 2011024885
(43) Date of publication of application: 18.12.2013
(73) Proprietor: Mitsubishi Electric Corporation, Tokyo 100-8310 (JP)
(72) Inventor: MUKAI, Hiroaki, Tokyo 100-8310 (JP); NAKURA, Kenichi, Tokyo 100-8310 (JP)
(74) Representative: Pfenning, Meinig & Partner mbB
(86) International application number: PCT/JP2012/051710
(87) International publication number: WO 2012/108274

(56) References cited:
- WO-A1-2008/126162
- WO-A1-2008/126162
- JP-A- 2008 199 253
- US-A1- 2010 111 523
- HIROAKI MUKAI ET AL.: 'A Study on the Power Reduction in PON System' IEICE TECHNICAL REPORT (TECHNICAL REPORT OF IEICE) vol. 110, no. 269, 04 November 2010, pages 7 - 12, XP008170495

## Description

### Field

The present invention relates to a communication system connected by redundant communication lines, a master station device used in the communication system, and a communication-line switching method applicable to the communication system, and to, for example, a PON (Passive Optical Network) system constituted by an OLT (Optical Line Terminal: station-side communication device) and a plurality of ONUs (Optical Network Units: subscriber-side communication devices).

### Background

There has been known a communication system configured as follows. A master station device is connected to slave station devices by a plurality of communication lines. In a normal communication state, a communication route is formed between the master station device and the slave station devices by selectively using one of the communication lines. When a failure occurs to the communication line that forms the communication route, the fault communication line is switched to another communication line. By adopting redundant configurations of communication lines in this way, it is possible to improve toughness against a communication failure. In such a communication system, when one communication device detects a failure in the communication line in use, then the communication system stops using the communication line to which the failure occurs, establishes a link by using another communication line, and resumes communication (see, for example, Patent Literature 1).

For the convenience of description, the communication system is described while taking an optical communication system or particularly a PON system as an example. In relation to these systems, there is known a method of determining that a communication failure occurs to a currently used line when no signals arrive from all the ONU connected to the OLT as an example of a method of detecting an abnormality in a communication line (see, for example, Patent Literature 2). In these communication systems, it is detected that communication stops based on, for example, any one of the following conditions (1) to (3).
(1) If the optical transmitter/receiver of the OLT does not receive optical signals for X [ms] (where X is a predetermined constant, for example, 2 [ms]);
(2) If the OLT does not receive a control signal (an MPCP frame) communicated with the ONU for Y [ms] (where Y is a predetermined constant, for example, 50 [ms]); or
(3) If the ONU does or do not respond to a transmission grant signal (GRANT) N consecutive times (where N is a predetermined constant, for example, 4).

### Citation List

### Patent Literatures

Patent Literature 1: Japanese Patent Application Laid-open No. 2001-119345 (FIG. 1)
Patent Literature 2: International Publication No. WO2008/126162 (FIG. 1)

### Summary

### Technical Problem

In the communication system like the PON system, each slave station device often includes a power-saving-mode operating function. The ONU in a power saving mode is intended to save power consumption by stopping both of a transmitter and a receiver or only the transmitter used for the data communication with the OLT. Accordingly, the ONU in the power saving mode does not transmit signals to the OLT and does not respond to control signals from the OLT. When the communication system incorporates therein a combination of redundant configurations of the communication lines and the power-saving-mode operating function described above, the following two problems occur.

First, when all the ONU connected to the OLT are temporarily in the power saving mode, the OLT disadvantageously and erroneously recognizes that a communication route failure occurs and switches the currently used communication line to another communication line. That is, in the PON system where a combination of redundant configurations of the communication lines and the power-saving-mode operating functions is incorporated, when all the ONU enter the power saving mode, no uplink signals reach the OLT from the ONU and the OLT does not receive any signals at all. Therefore, this situation applies to the conditions (1) to (3) under which it is determined that the communication line is abnormal as described above. Even if no communication route failure occurs, the OLT erroneously recognizes that a communication route failure occurs and switches the currently used communication line to another communication line. Furthermore, even after switching the communication lines, the operating states of the ONU do not change but remain sleep states. Therefore, this situation applies to the conditions under which it is determined that the communication line is abnormal as described above. As a result, the OLT repeatedly switches communication lines until any one of the ONU returns from the sleep state and transmits signals to the OLT.

Secondly, in a case where only one of the ONU is in a normal state and the remaining ONU are in the power saving mode, when a failure occurs to a branch line fiber connected to this ONU in the ordinary state, the OLT is disadvantageously unable to distinguish whether the failure occurs to a trunk line fiber or to the branch line fiber. If the failure occurs to the trunk line fiber, the OLT should switch the currently used communication line to another communication line. However, when the OLT switches the currently used communication line to another communication line in a case of the failure in the branch line fiber, this disadvantageously causes a temporary service disconnection for the normal ONU.

The present invention has been achieved to solve the above problems, and an object of the present invention is to reduce the possibility of switching errors of determining that a failure occurs to, for example, a currently used trunk communication line and switching the currently used trunk communication line to a backup communication line even when there is no failure in the currently used trunk communication line and to enable a more appropriate line operation.

### Solution to Problem

In a communication system including a master station device and a plurality of slave station devices connected to one another by a currently used communication line and a backup communication line, a communication route being formed between the master station device and the slave station devices by selectively using these communication lines, for causing each of the slave station devices to stop transmitting a signal to the master station device for a predetermined stop period of time when the slave station device is in a power saving mode, and for causing each of the slave station devices to transmit the signal to the master station device when the slave station device is in a normal mode, the communication system of the present invention includes: a power-saving-device identification unit that identifies each of the slave station devices in the power saving mode; and a line switching unit that switches the communication line forming the communication route from the currently used communication line to the backup communication line when a state where the master station device does not receive the signal from any of the slave station devices except for the slave station device identified by the power-saving-device identification unit as being in the power saving mode among the slave station devices continues for a predetermined time.

In a communication-line switching method applicable to a communication system including a master station device and a plurality of slave station devices connected to one another by a currently used communication line and a backup communication line, a communication route being formed between the master station device and the slave station devices by selectively using these communication lines, the communication system causing each of the slave station devices to stop transmitting a signal to the master station device for a predetermined stop period of time when the slave station device is in a power saving mode, and causing each of the slave station devices to transmit the signal to the master station device when the slave station device is in a normal mode, the communication-line switching method of the present invention includes: a power-saving-device identifying step of identifying each of the slave station devices in the power saving mode; and a line switching step of switching the communication line forming the communication route from the currently used communication line to the backup communication line based on an identification result at the power-saving-device identifying step when a state where the master station device does not receive the signal via the currently used communication line continues for a predetermined time.

In a master station device applicable to a communication system including the master station device and a plurality of slave station devices connected to one another by a currently used communication line and a backup communication line, a communication route being formed between the master station device and the slave station devices by selectively using these communication lines, the communication system causing each of the slave station devices to stop transmitting a signal to the master station device for a predetermined stop period of time when the slave station device is in a power saving mode, and causing each of the slave station devices to transmit the signal to the master station device when the slave station device is in a normal mode, the master station device of the present invention includes: a power-saving-device identification unit that identifies each of the slave station devices in the power saving mode; and a line switching unit that switches the communication line forming the communication route from the currently used communication line to the backup communication line when a state where the master station device does not receive the signal from any of the slave station devices except for the slave station device identified by the power-saving-device identification unit as being in the power saving mode among the slave station devices continues for a predetermined time.

### Advantageous Effects of Invention

According to the present invention, it is possible to reduce the possibility of switching errors of determining that a failure occurs to, for example, a currently used trunk communication line and switching the currently used trunk communication line to a backup communication line even when there is no failure in the currently used trunk communication line and to realize a more appropriate line operation.

### Brief Description of Drawings

FIG. 1 is a configuration diagram of a communication system according to a first embodiment of the present invention.
FIG. 2 is a configuration diagram of a PON control unit according to the first embodiment of the present invention.
FIG. 3 is a flowchart of operations of the communication system according to the first embodiment of the present invention.
FIG. 4 is a table of contents of a sleep-state management table described in the first embodiment of the present invention.
FIG. 5 is a sequence diagram of operations of the communication system described in the first embodiment of the present invention.
FIG. 6 is a table of contents of a sleep-state management table described in a second embodiment of the present invention.
FIG. 7 is a flowchart of operations of a communication system according to the second embodiment of the present invention.
FIG. 8 is a sequence diagram of operations of the communication system described in the second embodiment of the present invention.
FIG. 9 is a sequence diagram of operations of the communication system described in the second embodiment of the present invention.
FIG. 10 is a sequence diagram of operations of a communication system described in a third embodiment of the present invention.

### Description of Embodiments

Exemplary embodiments of a communication system according to the present invention will be explained below in detail with reference to the accompanying drawings. The present invention is not limited to the embodiments.

### First embodiment.

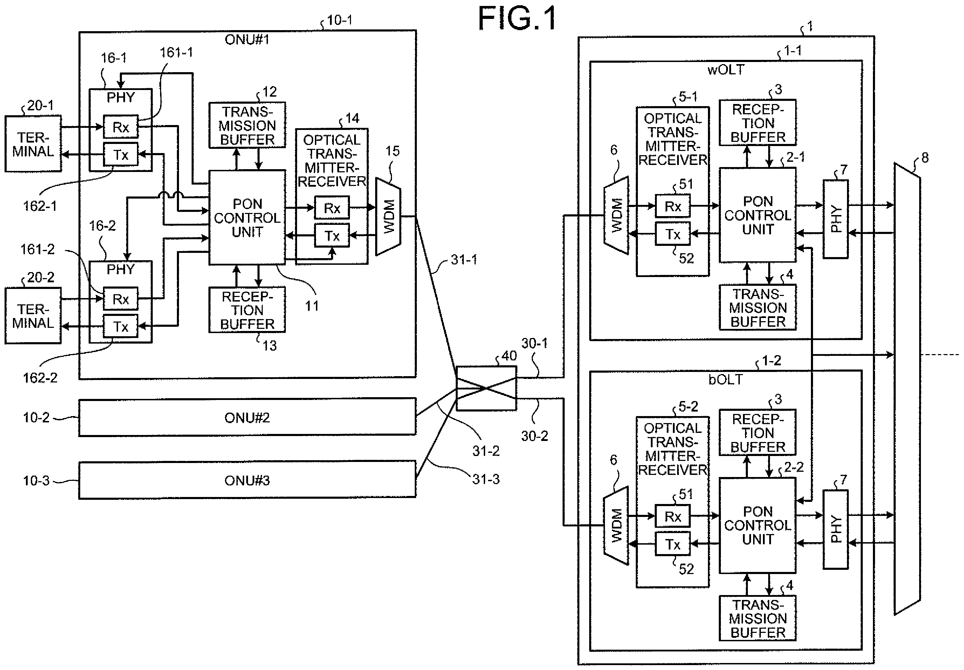

A communication system to which the present invention is applied is described while taking a PON (Passive Optional Network) system as an example. FIG. 1 depicts a configuration of a PON system according to a first embodiment of the present invention. In the drawings and the following descriptions, a plurality of devices or the like of the same type present in the communication system are distinguished from one another each by adding a symbol "-" and a number after a numeral ("ONU 10-1", for example). Furthermore, if the devices or the like are generically referred to or are not distinguished in the drawings and the following descriptions, it is assumed that the devices or the like are described while using symbols without "-" such as "ONU 10".

The PON system according to the present embodiment is configured so that an OLT (Optical Line Terminal: station-side communication device) 1 serving as a master station device is connected to ONUs (Optical Network Units: subscriber-side communication devices) 10 serving as slave station units via redundant optical communication lines, and so that a plurality of ONUs share the optical communication lines and hold two-way communication. The OLT 1 is connected to a higher-level network (not shown in FIG. 1) and terminal devices are connected to each of the ONU 10. Furthermore, the OLT 1 allocates uplink data bands to the ONU 10-1 to 10-3 so as to avoid overlapping of transmission time zones, thereby preventing collision of transmitted data from the ONU 10-1 to 10-3. While a configuration in which the three ONU 10 are connected to the OLT 1 is shown in FIG. 1, the number of the connected ONU is not limited to a specific number. It is needless to mention that, even if the number of the connected ONU is not three, the present invention is applicable.

In FIG. 1, the OLT 1 is configured to include a wOLT (a Working OLT, a currently used OLT) 1-1 and a bOLT (a backup OLT, a spare OLT) 1-2 used when the wOLT 1-1 fails. Each OLT 1 includes functions to make settings of communication lines together with the ONU 10 and to control communication with the ONU 10. Each ONU 10 is the communication device transmitting or receiving signals to or from the OLT 1 under control of the OLT 1 and includes an operating function of a power saving mode (a sleep mode) to be described later.

The wOLT 1-1 includes a PON control unit 2-1 that performs OLT-side processes based on a PON protocol, a reception buffer 3 that is a buffer for storing therein uplink data received from the ONU 10, a transmission buffer 4 that is a buffer for storing therein downlink data transmitted to the ONU 10, an optical transmitter-receiver 5-1 that performs processes (transmission and reception processes) for converting an optical signal received from each ONU 10 into an electric signal and outputting the electric signal to the PON control unit 2-1 or converting an electric signal from the PON control unit 2-1 into an optical signal and transmitting the optical signal to each ONU 10, a WDM (Wavelength Division Multiplexing) coupler (WDM) 6 that wavelength-multiplexes the uplink data and the downlink data, and a physical-layer processing unit (PHY) 7 that realizes a physical interface function as an NNI (Network Node Interface) with a network. A communication-line switching unit 8 transmits signals transmitted from the higher-level network to either the wOLT 1-1 or the bOLT 1-2 in a case of a downlink direction, and transmits signals transmitted from either the wOLT 1-1 or the bOLT 1-2 to the higher-level network in a case of an uplink direction. Alternatively, the communication-line switching unit 8 can function simply as a branching unit that transmits the signals transmitted from the higher-level network to both the wOLT 1-1 and the bOLT 1-2. Furthermore, each of the optical transmitters-receivers 5-1 and 5-2 includes an optical receiver (Rx: Receiver) 51 that performs the reception process and an optical transmitter (Tx: Transmitter) 52 that performs the transmission process. The bOLT 1-2 has a configuration identical to that of the wOLT 1-1, and therefore explanations thereof will be omitted.

The ONU 10-1 includes a PON control unit 11 that performs ONU-side processes based on the PON protocol, a transmission buffer (an uplink buffer) 12 that is a buffer for storing therein transmission data (uplink data) transmitted to the OLT 1, a reception buffer (a downlink buffer) 13 that is a buffer for storing therein reception data (downlink data) received from the OLT 1, an optical transmitter-receiver 14, a WDM 15 that wavelength-multiplexes the uplink data and the downlink data, and physical-layer processing units (PHY) 16-1 and 16-2 that realize physical interface functions as UNI (User Network Interfaces) with terminals 20-1 and 20-2, respectively. The PHY 16-1 is configured to include a reception unit (Rx: Receiver) 161-1 that performs a reception process and a transmission unit (Tx: Transmitter) 162-1 that performs a transmission process. The PHY 16-2 is configured to include a reception unit (Rx: Receiver) 161-2 that performs a reception process and a transmission unit (Tx: Transmitter) 162-2 that performs a transmission process.

The OLT 1 is connected to each ONU 10 by redundant trunk optical communication lines 30-1 and 30-2, an optical splitter 40, and one of branch optical communication lines 31-1 to 31-3. For the sake of convenience, the PON system according to the present embodiment is described while assuming that the trunk optical communication line 30-1 is a currently used optical communication line used as a communication line during normal communication (hereinafter, "currently used optical communication line 30-1"), and that the other trunk optical communication line 30-2 is a backup optical communication line (hereinafter, "backup optical communication line 30-2"). While FIG. 1 depicts a configuration in which one currently used optical communication line and one backup optical communication line are provided, the configuration is not limited to that shown in FIG. 1 and the PON system can be configured to provide a plurality of backup optical communication lines.

The optical splitter 40 is a passive optical element. During downlink communication, the optical splitter 40 divides a downlink optical signal transmitted from the OLT 1 via the currently used optical communication line fiber 30-1 or the backup optical communication line 30-2 to correspond to the number of the connected ONU (three in FIG. 1), and outputs the divided optical signals to the branch optical communication lines 31, respectively. During uplink communication, the optical splitter 40 outputs uplink optical signals transmitted from the branch optical communication lines 31 to the currently used optical communication line 30-1 and the backup optical communication line 30-2.

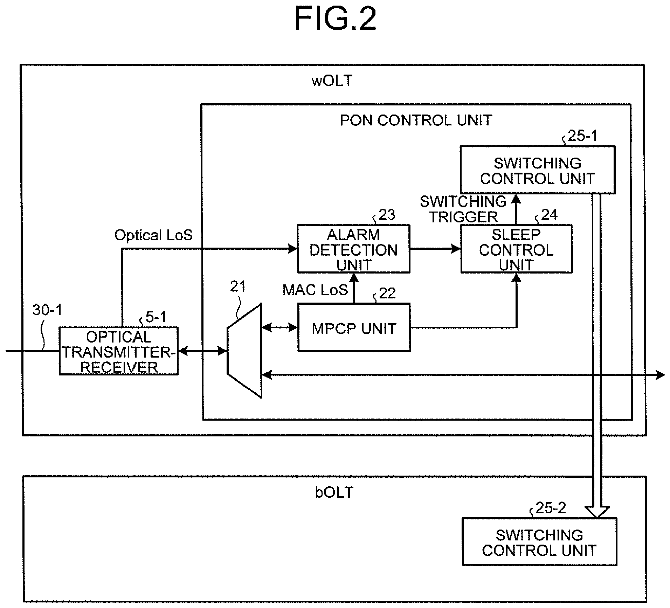

FIG. 2 is an example of a configuration of the PON control unit 2-1 of the wOLT 1-1 while extracting constituent parts relating to a switching operation to be described later. In FIG. 2, a timer is incorporated in the optical transmitter-receiver 5-1, and the optical transmitter-receiver 5-1 generates an Optical LoS (Loss of Signal) when no optical signals arrive from the ONU 10 for a certain period of time. A branching unit 21 divides an electric signal transmitted from the optical transmitter-receiver 5-1. An MPCP unit 22 performs a discovery process for detecting the ONU 10 connected to the OLT 1 and collecting information on each ONU 10 necessary for communication, a band allocation process for allocating bands for communication from the ONU 10, and the like. The MPCP unit 22 also detects a control signal (an MPCP frame) from signals transmitted from each ONU 10, generates an MAC LoS message when the wOLT 1-1 does not receive the MPCP frame from each ONU for a certain period of time, and transmits the MAC LoS message to an alarm detection unit 23. A sleep control unit 24 includes a sleep-state management table and manages an operating state (a normal mode or a power saving mode) of each ONU 10. A switching control unit 25-1 receives a switching trigger from the sleep control unit 24 and switches the OLT and the trunk optical communication line from the currently used OLT and the currently used trunk optical communication line to the backup OLT and the backup trunk optical communication line (performs protection switching). The bOLT 1-2 has a configuration identical to that of the wOLT 1-1, and therefore illustrations of respective constituent elements thereof and explanations thereof will be omitted.

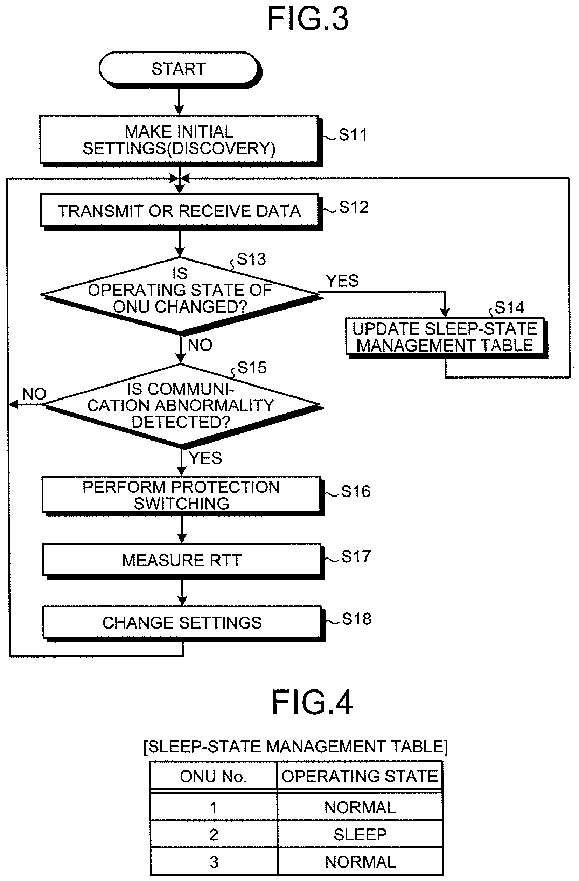

Operations performed by the present system are described. FIG. 3 is a flowchart of operations performed by the present system. First, in the communication system according to the first embodiment, the OLT 1 performs the discovery process and registers the information on each ONU connected to the OLT 1 via the optical communication lines in the sleep-state management table or the like (Step S11). When registration is completed, the OLT 1 transmits or receives data to or from each ONU 10 based on the registered information (Step S12), and manages the operating state of each ONU that transitions into the power saving mode or returns from the power saving mode into the normal mode (Step S13). When the ONU transitioning into the power saving mode or the ONU returning from the power saving mode into the normal mode is present, the OLT 1 updates the sleep-state management table (Step S14). Furthermore, the OLT 1 manages states of the communication lines based on a communication state of the communication with each ONU while referring to the sleep-state management table (Step S15). The OLT 1 switches the currently used communication line to the backup communication line (performs the protection switching) when detecting an abnormality (Step S16). When having performed the switching, the OLT 1 measures RTT (Round Trip Time) (Step S17), changes settings (Step S18), and resumes communication. The operations characteristic of the present invention are described below.

First, the discovery process and a normal communication operation are described. During the communication between the OLT and the ONU, the OLT 1 performs the discovery process, thereby setting a logical link and setting necessary synchronization and control information, and holds the communication. In a case where the unconnected ONU 10 is newly connected to the branch optical communication line 31 or where the ONU 10 that has been powered down is powered on, the ONU 10 is unable to communicate with the OLT 1 because line settings for the communication with the OLT 1 are not made and the information on the ONU 10 is not registered in the OLT 1. This state is referred to as "deregistered state". The ONU 10 in the deregistered state performs reception only until being registered in the OLT 1, and is set in a standby state until the OLT 1 grants the ONU 10 to communicate with the OLT 1.

When receiving a control message (a discovery gate) notifying the ONU 10 of the acceptance of new registration from the OLT 1, the ONU 10 transitions into an initial setting state (a discovery state). In this state, the ONU 10 transmits own identification information and, if necessary, own capability information to the OLT 1, and is registered as a communication counterpart in the OLT 1 based on this information. When registering the ONU 10, the OLT 1 transmits a control message notifying the ONU 10 of the registration. This control message includes communication-link setting information, and the ONU 10 receiving this control message stores the setting information and makes necessary communication settings to the own device, whereby the ONU 10 becomes a communicable state. The ONU 10 that has transitioned into a registered state subsequently transmits or receives data to or from the OLT 1 using the stored setting information.

The PON control unit 2-1 stores the downlink data (downlink communication data) received from the higher-level network via the PHY 7 in the transmission buffer 4. At a time of transmitting the data from the wOLT 1-1, the PON control unit 2-1 reads the downlink data stored in the transmission buffer 4 and outputs the downlink data to the optical transmitter-receiver 5-1, the Tx 52 of the optical transmitter-receiver 5-1 outputs the transmission data to the WDM 6 as optical signals, and the WDM 6 wavelength-multiplexes the optical signals output from the optical transmitter-receiver 5-1 and outputs the multiplexed signals as downlink signals to the ONU 10 via the subscriber line 30-1 or 30-2. Furthermore, in a case where the PON control unit 2-1 transmits a control message such as a message notifying the ONU 10 of transmission band allocation for giving a grant of transmission in the uplink direction or the like, the PON control unit 2-1 outputs the generated control message to the optical transmitter-receiver 5-1, and then the control message is transmitted to the ONU 10 similarly to the downlink data. While the WDMs 6 and 15 are used for the wavelength multiplexing in the PON system shown in FIG. 1, it is not essential to use the WDMs 6 and 15 in a case of single wavelength communication.

When the ONU 10-1 receives the downlink signals from the wOLT 1-1, the WDM 15 demultiplexes the downlink signals and outputs the demultiplexed downlink signals to the optical transmitter-receiver 14, and the Rx 142 in the optical transmitter-receiver 14 converts the downlink signals into downlink data of electric signals and outputs the downlink data to the PON control unit 11. The PON control unit 11 stores the downlink data output from the Rx 142 of the optical transmitter-receiver 14 in the reception buffer 13. The PON control unit 11 reads the downlink data stored in the reception buffer 13 and outputs the downlink data to each of or one of the PHY 16-1 and 16-2 depending on destination of the data. Each of or one of the PHY 16-1 and 16-2 receiving the downlink data performs a predetermined process on the downlink data and transmits the processed downlink data to the terminal 20-1 or 20-2 connected to the ONU 10-1.

On the other hand, in a case of transmitting the uplink data from each of the ONUs 10-1 to 10-3, the PON control unit 11 stores the uplink data acquired from the terminals 20-1 and 20-2 via the PHY 16-1 and 16-2 in the transmission buffer 12. The PON control unit 11 reads the uplink data stored in the transmission buffer based on a transmission band granted by the wOLT 1-1 and outputs the uplink data to the optical transmitter-receiver 14. The Tx 141 of the optical transmitter-receiver 14 converts the uplink data into optical signals (uplink signals) and transmits the optical signals to the wOLT 1-1 via the WDM 15 and the branch optical communication line 31.

The PON control unit 2-1 of the wOLT 1-1 stores the uplink data received from each of the ONUs 10-1 to 10-3 via the WDM 6 and the Rx 51 of the optical transmitter-receiver 5-1 in the reception buffer 3. The PON control unit 2-1 reads the uplink data stored in the reception buffer 3 and outputs the uplink data to the network via the PHY 7.

In each of the ONUs 10-1 to 10-3, the PON control unit 11 receives control messages transmitted from the wOLT 1-1 via the WDM 15 and the Rx 142 of the optical transmitter-receiver 14, and performs operations based on commands indicated in the respective control messages, generates a response to each control message, and performs other processes.

Each ONU includes a function to transition into the power saving mode (the sleep mode) according to the communication state. The power saving mode refers to a operating state where the ONU 10 plans to reduce the power consumption by stopping both the transmitter and the receiver or only the transmitter in a case where no data to be transmitted in the uplink or downlink direction is present or the like. A case where the OLT 1 transmits a request of transition into the sleep mode and each ONU transitions into the sleep mode is described here. The OLT 1 determines whether the downlink data is present in the transmission buffer 4, and transmits a power-saving-mode transmission allowance (Sleep Allow) message to each ONU 10 and notifies the ONU of a duration time of the power saving mode when determining that the downlink data is not present. The ONU 10 receiving the Sleep Allow message transmits a response message (Sleep Ack) to the OLT 1 and transitions into the power saving mode. As a result, for the duration time, the ONU 10 stops transmitting optical signals to the OLT 1, so that the OLT 1 does not receive any signals from the ONU in the power saving mode.

When fewer communication signals are generated at nighttime or the like, all the ONU connected to the OLT often transition into the power saving mode. In this case, the OLT is temporarily in a state of receiving no signals from all the ONU. Therefore, the conventional communication system having redundant configurations determines that a communication route failure occurs and switches the currently use optical communication line to the backup optical communication line even if no communication route failure occurs. According to the present invention, the OLT manages the information on the ONU in the power saving mode and controls the switching from the currently used optical communication line to the backup optical communication line based on the management information, thereby solving this problem. A specific switching operation is described below.

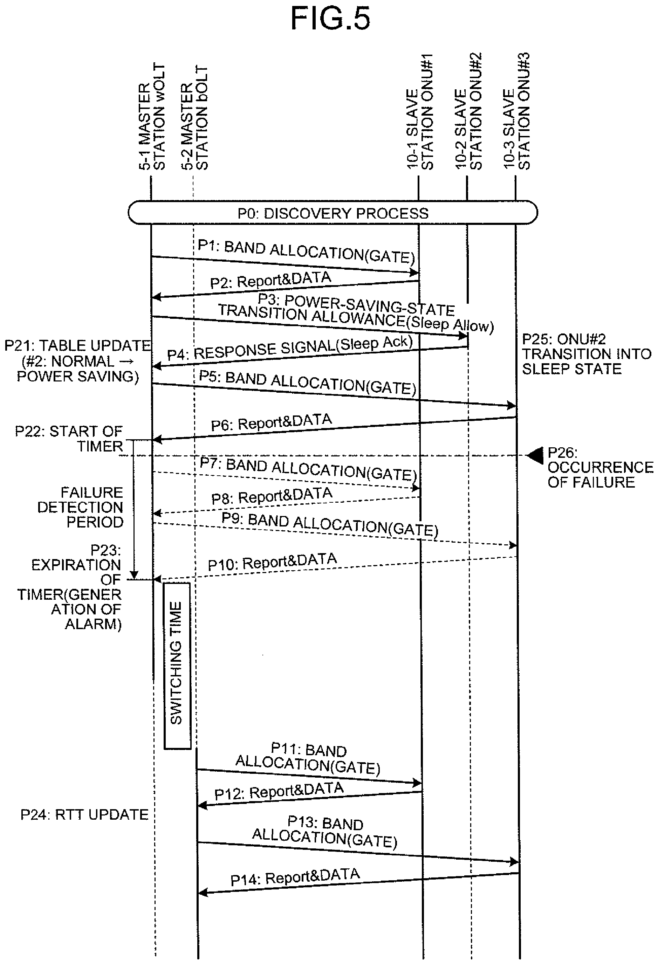

A method of switching the currently used optical communication line to the backup optical communication line is described with reference to FIG. 2 and a sequence diagram of FIG. 5. The method is described while referring to a case of performing the switching operation using an Optical LoS alarm generated when a state where the OLT does not receive signals from any of the ONU continues for a certain time.

The wOLT 1-1 performs the discovery process as described above (P0), and the two-way communication is held between the OLT and each ONU based on the processing result (P1, P2, P5, and P6). As for the ONU #2, the OLT transmits the power-saving-state transition allowance message (Sleep Allow) to the ONU (P3), and the ONU #2 transmits the response signal (Sleep Ack) (P4) and transitions into the power saving mode (P25). The MPCP unit 22 receiving the response signal from the ONU #2 via the optical transmitter-receiver 5-1 changes operating state information on the ONU #2 in the sleep-state management table stored in the sleep control unit 24 from "Normal" to "Power saving" (P21). FIG. 4 is an example of the sleep-state management table in which the change has been made.

The optical transmitter-receiver 5-1 starts the incorporated timer at an arbitrary timing, and monitors signals (messages) transmitted from each ONU 10 and received by the wOLT 1-1. When the wOLT 1-1 does not receive signals (messages) from any of the terminal units ONU 10 and the timer expires, the optical transmitter-receiver 14 determines that a failure occurs to the communication line that forms the communication route between the OLT 1 and the ONU 10, that is, the currently used optical communication line 30-1. The time from start of the timer to expiration of the timer is referred to as "failure detection time".

For example, after receiving a Report message from the ONU 10-3 (P6), the optical transmitter-receiver 5-1 starts the incorporated timer (P22). In a case where the wOLT 1-1 does not receive signals (messages) from any of the ONU 10 for the certain period of time (the failure detection time) and the timer expires, the optical transmitter-receiver 5-1 determines that a failure occurs to the currently used communication route, that is, the currently used trunk optical fiber 30-1, generates the alarm (Optical LoS), and transmits the alarm (Optical LoS) to the alarm detection unit 23.

When detecting the alarm, the alarm detection unit 23 notifies the sleep control unit 24 accordingly. The sleep control unit 24 determines whether the certain period (the failure detection time) passes since the wOLT 1-1 has not received signals from the ONU other than the ONU in the power saving mode, that is, all the ONU in the normal mode while referring to the sleep-state management table stored in the sleep control unit 24. In this case, the sleep control unit 24 determines whether all the ONU are in the power saving mode, and transmits the switching trigger to the switching control unit 25-1 when at least one ONU in the normal mode is present. On the other hand, when all the ONU are in the sleep state, the sleep control unit 24 does not transmit the switching trigger.

The operation for transmitting the switching trigger using the Optical LoS alarm generated when the OLT has not received signals from any of the ONU for the certain period of time has been described here. However, the switching-trigger transmission operation is not limited to this example. For example, in a case of using the MAC LoS alarm generated when the OLT has not received the MPCP frame from each ONU for the certain period, the sleep control unit 24 transmits the switching trigger when the MAC LoS alarms are detected for all the ONU in the normal mode while referring to the sleep-state management table. The same holds true for a case of using a LoSi or LoBi alarm generated when each ONU does not respond to the transmission grant (Grant) certain consecutive times.

The switching control unit 25-1 receiving the switching trigger executes the protection switching. That is, the switching control unit 25-1 starts the bOLT 1-2 in the standby state and forms a communication route between the OLT 1 and each ONU 10 using the bOLT 1-2 and the backup optical communication line 30-2. With this configuration, the higher-level network is connected to the optical splitter 40 via the bOLT 10-2 and the backup optical communication line 30-2.

When the trunk optical communication line 30 that forms the communication route between the OLT 1 and each ONU 10 is switched from the currently used optical communication line 30-1 to the backup optical communication line 30-2, a PON control unit 2-2 within the bOLT 1-2 starts communication while referring to the registration information on each ONU 10 acquired by the discovery process described above. Furthermore, the PON control unit 2-2 transmits or receives signals to or from any of the ONU 10 and measures an RTT difference between the currently used optical communication line 30-1 and the backup optical communication line 30-2. By using the measured RTT difference, it is possible to dispense with the discovery process performed when the trunk optical communication line 30 is switched from the currently used optical communication line 30-1 to the backup optical communication line 30-2.

As described above, in the communication system according to the present embodiment, the OLT 1 serving as the master station device manages the operating states of the ONU 10, determines that a failure occurs to the currently used communication route (path), that is, the currently used optical communication line 30-1 on condition that the OLT 1 does not receive any messages from all the ONU other than the ONU in the power saving mode for the certain period of time, and performs the protection switching. Therefore, even if all the ONU connected to the OLT temporarily enter the power saving mode while there is no failure in the currently used trunk communication line, the OLT 1 can reduce the possibility of switching errors of erroneously determining that a failure occurs and of switching the currently used trunk communication line to the backup trunk communication line and can operate the lines more appropriately.

In the embodiment described above, the present invention has been explained while exemplifying a PON system, it is obvious for persons skilled in the art that various changes and modifications can be made without departing from the technical scope of the present invention, and such changes and modifications are also included in the technical scope of the present invention.

### Second embodiment.

In the first embodiment, a configuration of managing operating states of an ONU serving as a slave station device and detecting a failure in a communication line based on a management result has been described. As for a communication system according to a second embodiment, a configuration in which each ONU in a power saving mode regularly starts and transmits Report messages that are control signals, manages a receiving state of signals (a keep alive state) of an OLT serving as a master station device, and detecting a failure in a communication line based on these management results is further described.

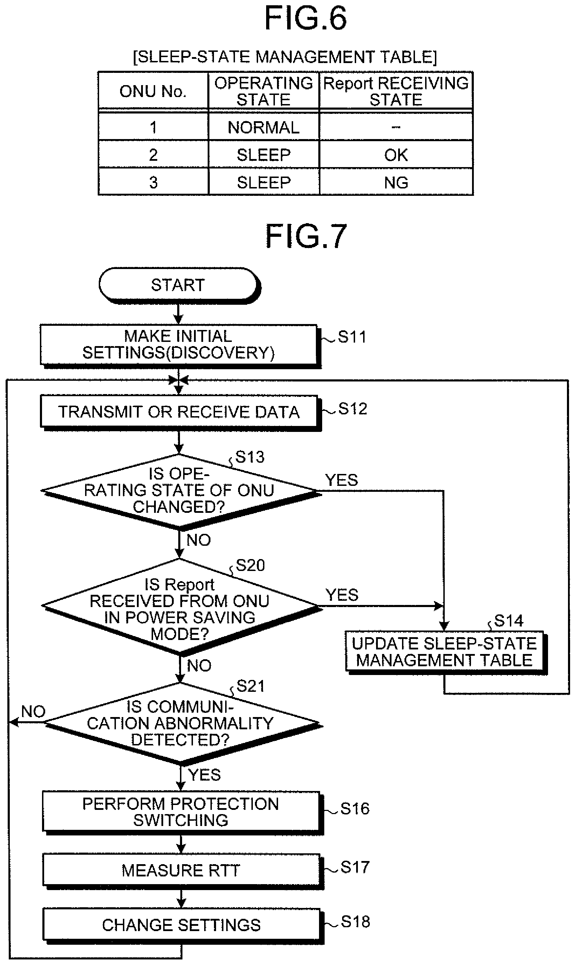

The configuration of the communication system according to the second embodiment is identical to that described in the first embodiment and shown in FIGS. 1 and 2, and therefore explanations thereof will be omitted. As shown in FIG. 6, not only operating states but also receiving states (Report receiving states) as to whether the OLT 1 receives the Report messages are managed in the sleep-state management table stored in the sleep control unit 24.

Operations performed by the present system are described next.

FIG. 7 is a flowchart of the operations performed by the present system. In FIG. 7, steps denoted by the same symbols as those in FIG. 3 indicate identical or corresponding operations to those in FIG. 3. The communication system described in the second embodiment manages not only an operating state (a power saving mode or a normal mode) of each ONU but also the Report receiving state as to whether the OLT 1 receives the Report message from the ONU 10 in the power saving mode (Step S20). Furthermore, when an alarm is detected, the OLT 1 determines whether a communication abnormality occurs while referring to the operating states and the Report receiving states in the sleep-state management table (Step S21). The operations at the respective steps are described.

Initial settings (a discovery process) are identical to those in the first embodiment, the communication line settings are made, and data is transmitted or received based on the collected information on the ONU 10. Furthermore, similarly to the case described in the first embodiment, in the communication system according to the second embodiment, each ONU 10 includes the power-saving-mode operating function. However, the communication system according to the second embodiment is configured so that each ONU in the power saving mode regularly starts and transmits control signals (Report messages) to the OLT 1. In this temporary startup state, if the uplink data is not present in the transmission buffer 12 and a startup command (Sleep Allow (Wakeup)) is not transmitted from the OLT 1, the ONU 10 transitions into the power saving mode again after transmitting the control signal to the OLT 1.

A state where the ONU 10 stops the transmitter or the like and does not transmit signals in the power saving mode is referred to as "stopped state of a transmitter or the like". The state where the ONU 10 temporarily starts the transmitter or the like and transmits signals to the OLT 1 after a passage of the stopped state of a transmitter or the like for a certain period of time is referred to as "temporary startup state". Furthermore, a time for which a stopped state of one transmitter or the like continues (a time since the start of the stopped state of transmitter or the like until the transition into the temporary startup state) is referred to as "sleep time (T_SLEEP)".

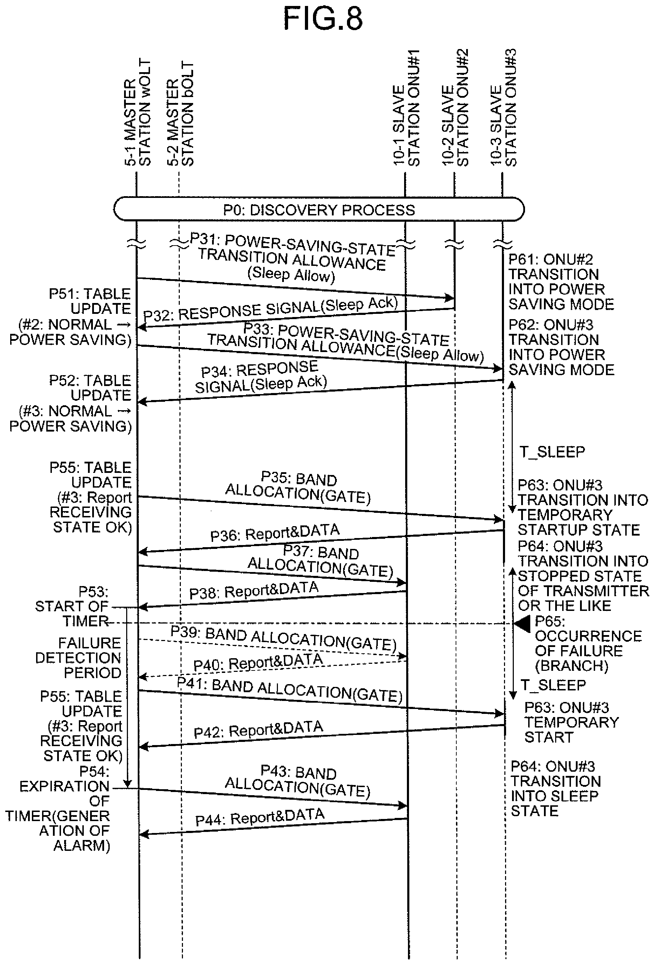

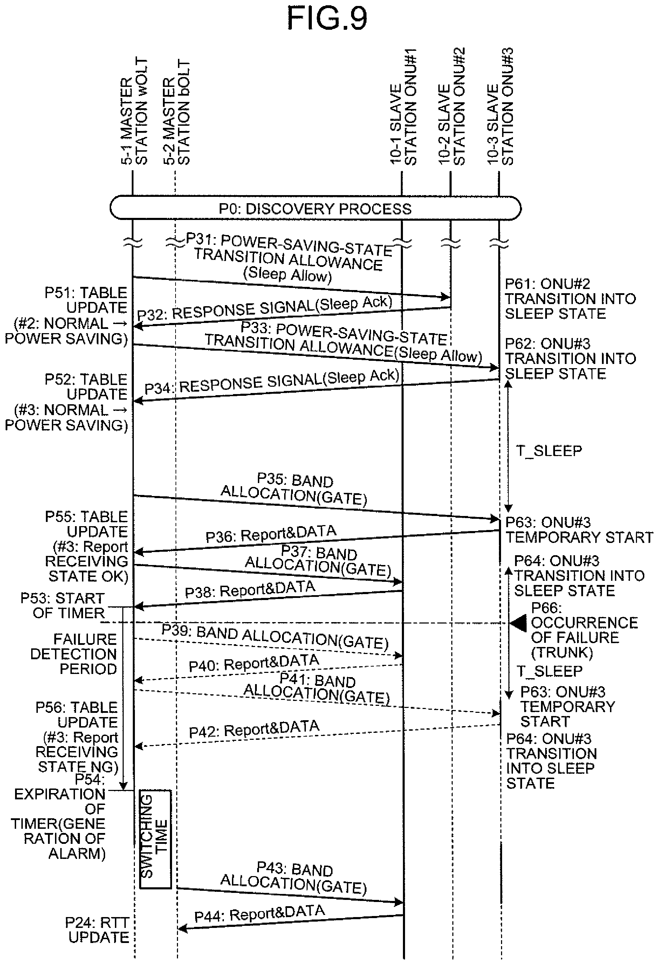

Next, the switching operation is described with reference to sequence diagrams of FIGS. 8 and 9. In FIGS. 8 and 9, operations denoted by the same symbols represent identical or corresponding operations. In FIGS. 8 and 9, the wOLT 1-1 performs the discovery process as described above (P0), and the two-way communication is held between the OLT and each ONU based on the processing result. As for the ONU #2 and the ONU #3, the OLT 1 transmits the power-saving-state transition allowance messages (Sleep Allow) to the ONU 10 (P31 and P33), respectively, and the ONU #2 and the ONU #3 transmit the response signals (Sleep Ack) (P32 and P34) and transition into the power saving mode (P61 and P62), respectively. The MPCP unit 22 receiving the response signals from the ONU #2 and the ONU #3 via the optical transmitter-receiver 5-1 changes operating state information on the ONU #2 and the ONU #3 in the sleep-state management table stored in the sleep control unit 24 from "Normal" to "Power saving".

Furthermore, the ONU #2 and the ONU #3 in the power saving mode regularly start and transmit the control signals (Report messages) to the OLT 1, respectively (P35, P36, P41, and P42). In FIGS. 8 and 9 and the following descriptions, only temporary startup and control signal transmission of the ONU #3 are described and explanations of the temporary startup and control signal transmission of the ONU #2 to the OLT 1 will be omitted for the convenience of description. The wOLT 1-1 receiving the Report message from the ONU #3 in the power saving mode (P36) registers the reception of the Report in a portion relating to the ONU #2 in the sleep-state management table stored in the sleep control unit 24 ("OK" in a box of the Report receiving state in the table of FIG. 7).

It is assumed here that a failure occurs to the branch optical communication line 31-1 connected to the ONU #1 that is only in the normal mode among those connected to the OLT 1 (P65). In this case, the conventional communication system is unable to determine whether the failure occurs to the branch optical communication line or to the trunk optical communication line. Accordingly, even if the failure occurs to the branch optical communication line, the trunk optical communication line 30 is switched and a problem such as the occurrence of a temporary communication stop occurs. The communication system according to the second embodiment solves this problem by performing the protection switching on a condition that an alarm from the ONU other than the ONU in the power saving mode is detected and that a state where the OLT 1 does not receive the Report message from the ONU in the power saving mode continues for a certain period of time.

A case where a failure detection time is longer than a sleep time is described here. In this case, when an alarm is generated, the sleep control unit 24 refers to the sleep-state management table stored in the sleep control unit 24. The sleep control unit 24 does not perform the protection switching when the OLT 1 normally receives the Report message from the ONU 10 in the power saving state ("OK" in the box of the Report receiving state), and performs the protection switching when the OLT 1 does not normally receive the Report message from the ONU 10 in the power saving mode ("NG" in the box of the Report receiving state). A case of performing the switching operation using the MAC LoS alarm generated when the OLT 1 does not receive the MPCP frame from each ONU 10 for the certain period of time is described here. However, identical effects can be achieved in a case of using the Optical LoS alarm or the LoSi or LoBi alarm.

A case where a failure occurs to the branch optical communication line 31-1 is described with reference to the sequence diagram of FIG. 8. When a failure occurs to the branch optical communication line 31-1 (P65), the OLT 1 does not receive a signal from the ONU #1 in the normal mode (P39 and P40) and, after the passage of the certain period of time, the MPCP unit 22 in the wOLT 1-1 generates the MAC LoS alarm for the ONU #1 (P54). On the other hand, the branch optical communication line 31-3 and the currently used optical communication line 30-1 connected to the ONU #3 are normal. Therefore, the ONU #3 in the power saving mode temporarily starts and transmits the control signal (Report message) to the OLT, and the wOLT 1-1 receives the signal (P41 and P42). The MPCP unit 22 receiving the Report message enters "OK" in the Report receiving state relating to the ONU #3 in the sleep-state management table stored in the sleep control unit 24.

The sleep control unit 24 receiving the MAC LoS alarm from the MPCP unit 22 via the alarm detection unit 23 refers to the sleep-state management table, and determines that the MAC LoS alarm is generated for all the ONU (the ONU #1 in this example) other than the ONU in the power saving mode. On the other hand, because the ONU (the ONU #3 in this example) relating to which the Report receiving state in the sleep-state management table is "OK" is present, the sleep control unit 24 does not perform the protecting switching in this case. Therefore, it is possible to prevent switching errors of performing the protection switching even when there is no failure in the trunk optical communication line.

Meanwhile, a case where a failure occurs to the currently used optical communication line 30-1 that is the trunk optical communication line is described with reference to FIG. 9. When a failure occurs to the trunk optical communication line 30-1 (P66) as shown in FIG. 9, the OLT 1 does not receive a signal from the ONU #1 in the normal mode (P39 and P40) similarly to the case where a failure occurs to the branch optical communication line 31-1 and, after the passage of the certain period of time, the MPCP unit 22 in the wOLT 1-1 generates the MAC LoS alarm for the ONU #1 (P54). Furthermore, because the wOLT 1-1 does not receive the Report message from the ONU #3, either (P42), the MPCP unit 22 changes the box relating to the ONU #3 in the sleep-state management table to "NG". The sleep control unit 24 receiving the MAC LoS alarm relating to the ONU #1 refers to the sleep-state management table. The sleep control unit 24 executes the protection switching and switches the OLT and the trunk optical communication line from the currently used OLT and the currently used optical communication line to the backup OLT and the backup optical communication line because the ONU (the ONU #3 in this example) relating to which the Report receiving state in the sleep-state management table is "NG" is present. Therefore, it is possible to normally perform the protection switching in the case of a failure in the trunk optical communication line for which it is necessary to perform the protection switching.

Because of the above configurations, the communication system according to the second embodiment can reduce the possibility of switching errors even if a combination of redundant configurations of the communication lines and the power-saving-mode operating state is incorporated similarly to the first embodiment. Furthermore, it is possible to determine which communication line a failure occurs to and to operate the lines more appropriately in a case, for example, where only one ONU is in the normal mode while the conventional communication system is unable to determine whether a failure occurs to the branch communication line or the trunk communication line.

### Third embodiment.

In the second embodiment, a communication-line switching method in a case where a failure detection time is set longer than a sleep time in a communication system in which an ONU in a power saving mode regularly starts and transmits control signals to an OLT has been described. In a third embodiment, a communication-line switching method in a case where a failure detection time is set shorter than a sleep time in a system similar to that explained in the second embodiment is described. The configuration of the communication system according to the third embodiment is identical to that described in the second embodiment, and it is as shown in FIGS. 1 and 2.

Operations performed by the present system are described. Operations except for the switching operation performed by the communication system according to the third embodiment are identical to those described in the second embodiment, and therefore explanations thereof will be omitted. The switching operation performed by the communication system according to the third embodiment is described below.

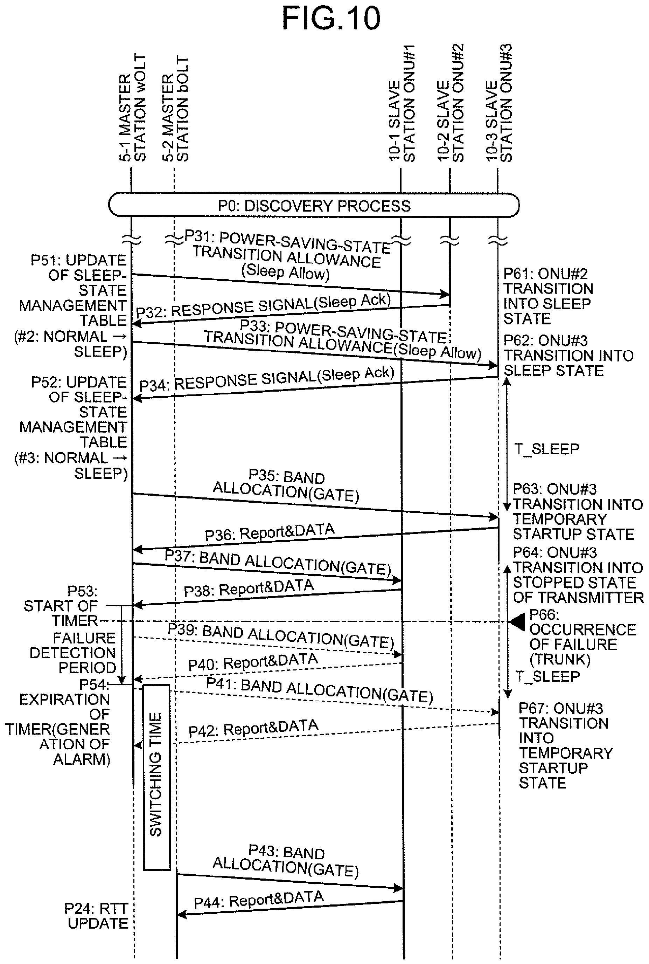

In the second embodiment, a case where a failure detection time is set longer than the sleep time has been described. There are cases where the failure detection time is set shorter than the sleep time as described in the third embodiment. In these cases, no control signals often arrive from the ONU in the power saving mode since a failure occurs to a communication line until the timer within the wOLT 1-1 expires and the alarm is generated. That is, even if a failure occurs to the trunk optical communication line and the alarm is generated, the ONU relating to which the Report receiving state in the sleep-state management table is "OK" is often present. In this case, this problem can be solved by setting the sleep time of each ONU 10 equal to or shorter than the time (a switching time) required for the switching control unit 25-1 or 25-2 to perform the switching operation. The switching operation is described in detail with reference to FIG. 10.

The switching operation is described with reference to a sequence diagram of FIG. 10. When a failure occurs to the currently used optical communication line 30-1 (P66), and the failure detection time is sufficiently shorter than the sleep time of each ONU, there are cases where the timer expires and the alarm is generated before the ONU #3 in the power saving mode enters the next temporary startup state (P67). In these cases, the Report receiving state relating to the ONU #3 in the sleep-state management table remains "OK" based on the Report message (P36) received before the failure occurs (P66). Accordingly, while it is originally necessary to switch the currently used optical communication line to the backup optical communication line because the failure occurs to the trunk optical communication line, the protection switching is not performed in the configuration described in the second embodiment.

Therefore, the sleep time of each ONU 10 is set equal to or shorter than the switching time (a time required for the OLT 1 to perform the switching operation) and the switching operation starts when an alarm is generated. With this configuration, the switching operation starts (P54) when the timer expires and the alarm is generated. However, because the sleep time of each ONU 10 is shorter than the switching time, the ONU #3 in the sleep state transmits the Report message at least once during the switching operation. The wOLT 1-1 receiving the Report message during the switching operation stops the switching operation and resumes communication while using the currently used OLT and the currently used optical communication line as they are. On the other hand, when a failure occurs to the currently used optical communication line 30-1, the wOLT 1-1 does not receive the Report signal during the switching time. Accordingly, the wOLT 1-1 continues the switching operation, and resumes communication after switching the optical communication line from the currently used optical communication line to the backup optical communication line (P43 and P44).

Because the communication system according to the third embodiment is configured as described above, it is possible to reduce the possibility of the occurrence of switching errors similarly to the first embodiment. Furthermore, it is possible to determine which communication line a failure occurs to and to operate the lines more appropriately in a case, for example, where only one ONU is in the normal mode while the conventional communication system is unable to determine whether a failure occurs to the branch communication line or to the trunk communication line.

### Reference Signs List

1 OLT, 2-1 PON control unit (currently used), 2-2 PON control unit (backup), 3 reception buffer, 4 transmission buffer, 5-1 optical transmitter-receiver (currently used), 5-2 optical transmitters-receiver (backup), 6 WDM, 7 PHY, 8 communication-line switching unit, 10-1 to 10-3 ONU, 11 PON control unit, 12 transmission buffer, 13 reception buffer, 14 optical transmitter-receiver, 15 WDM, 16-1, 16-2 PHY, 20-1, 20-2 terminal, 21 branching unit, 22 MPCP unit, 23 alarm detection unit, 24 sleep control unit, 25-1, 25-2 switching control unit, 30-1 trunk optical communication line (currently used optical communication line), 30-2 trunk optical communication line (backup optical communication line), 31 branch optical communication line, 40 optical splitter, 51 Rx, 52 Tx, 161-1, 161-2 Rx, 162-1, 162-2 Tx.

## Claims

1. A communication system including a master station device (1) and a plurality of slave station devices (10) connected to one another by a currently used communication line and a backup communication line, a communication route being formed between the master station device (1) and the slave station devices (10) by selectively using these communication lines, for causing each of the slave station devices (10) to stop transmitting a signal to the master station device (1) for a predetermined stop period of time when the slave station device is in a power saving mode, and for causing each of the slave station devices (10) to transmit the signal to the master station device (1) when the slave station device is in a normal mode, the communication system comprising:
a power-saving-device identification unit (24) that identifies each of the slave station devices (10) in the power saving mode; and
a line switching unit (25-1) that switches the communication line forming the communication route from the currently used communication line to the backup communication line when a state where the master station device (1) does not receive the signal from any of the slave station devices (10) except for the slave station device identified by the power-saving-device identification unit (24) as being in the power saving mode among the slave station devices (10) continues for a predetermined time.

2. The communication system according to claim 1, wherein
each of the slave station devices (10) in the power saving mode includes a receiving-state management unit that manages a control-signal receiving state of the master station in which the master station device (1) receives a control signal transmitted to the master station device (1) at an interval of a time set to be associated with the stop period of time, and
the line switching unit (25-1) switches the communication line forming the communication route from the currently used communication line to the backup communication line based on a management result of the receiving-state management unit.

3. The communication system according to claim 2, wherein each of the slave station devices (10) in the power saving mode transmits the control signal to the master station device (1) at an interval of a time equal to or shorter than a time required to switch the communication line from the currently used communication line to the backup communication line.

4. The communication system according to any one of claims 1 to 3, wherein
the backup communication line is constituted by a plurality of communication lines, and
the line switching unit (25-1) executes switching by selecting one of the communication lines constituting the backup communication lines and by switching the communication line used to communicate with the slave station devices (10) from the currently used communication line to the selected communication line.

5. A communication-line switching method applicable to a communication system including a master station device (1) and a plurality of slave station devices (10) connected to one another by a currently used communication line and a backup communication line, a communication route being formed between the master station device (1) and the slave station devices (10) by selectively using these communication lines, the communication system causing each of the slave station devices (10) to stop transmitting a signal to the master station device (1) for a predetermined stop period of time when the slave station device is in a power saving mode, and causing each of the slave station devices (10) to transmit the signal to the master station device (1) when the slave station device is in a normal mode, the communication-line switching method comprising:
a power-saving-device identifying step of identifying each of the slave station devices (10) in the power saving mode; and
a line switching step of switching the communication line forming the communication route from the currently used communication line to the backup communication line based on an identification result at the power-saving-device identifying step when a state where the master station device (1) does not receive the signal via the currently used communication line continues for a predetermined time.

6. The communication-line switching method according to claim 5, comprising:
a control-signal transmitting step of causing each of the slave station devices (10) in the power saving mode to transmit a control signal to the master station device (1) at an interval of a predetermined time; and
a receiving-state managing step of causing the master station device (1) to manage a control-signal receiving state for the control signal transmitted to the master station device (1) at the control-signal transmitting step, wherein
at the line switching step, the communication line forming the communication route is switched from the currently used communication line to the backup communication line based on a management result at the receiving-state managing step.

7. The communication-line switching method according to claim 6, wherein at the control-signal transmitting step, each of the slave station devices (10) in the power saving mode transmits the control signal to the master station device (1) at an interval of a time equal to or shorter than a time required to switch the communication line from the currently used communication line to the backup communication line.

8. A master station device (1) applicable to a communication system including the master station device (1) and a plurality of slave station devices (10) connected to one another by a currently used communication line and a backup communication line, a communication route being formed between the master station device (1) and the slave station devices (10) by selectively using these communication lines, the communication system causing each of the slave station devices (10) to stop transmitting a signal to the master station device (1) for a predetermined stop period of time when the slave station device is in a power saving mode, and causing each of the slave station devices (10) to transmit the signal to the master station device (1) when the slave station device is in a normal mode, the master station device (1) comprising:
a power-saving-device identification unit (24) that identifies each of the slave station devices (10) in the power saving mode; and
a line switching unit (25-1) that switches the communication line forming the communication route from the currently used communication line to the backup communication line when a state where the master station device (1) does not receive the signal from any of the slave station devices (10) except for the slave station device identified by the power-saving-device identification unit (24) as being in the power saving mode among the slave station devices (10) continues for a predetermined time.

## Patentansprüche

1. Kommunikationssystem, enthaltend eine Hauptstationseinrichtung (1) und eine Vielzahl von Nebenstationseinrichtungen (10), die durch eine gegenwärtig genutzte Kommunikationsleitung und eine Sicherungskommunikationsleitung miteinander verbunden sind, wobei eine Kommunikationsroute zwischen der Hauptstationseinrichtung (1) und den Nebenstationseinrichtungen (10) gebildet ist durch selektives Nutzen dieser Kommunikationsleitungen, um jede der Nebenstationseinrichtungen (10) zu veranlassen, Übertragen eines Signals an die Hauptstationseinrichtung (1) für eine vorherbestimmte Stoppzeitdauer zu stoppen, wenn die Nebenstationseinrichtung in einem Energiesparmodus ist, und um jede der Nebenstationseinrichtungen (10) zu veranlassen, das Signal an die Hauptstationseinrichtung (10) zu übertragen, wenn die Nebenstationseinrichtung in einem Normalmodus ist, wobei das Kommunikationssystem umfasst:
eine Energiespareinrichtungsidentifikationseinheit (24), die jede der Nebenstationseinrichtungen (10) im Energiesparmodus identifiziert; und
eine Leitungsschalteinheit (25-1), die die Kommunikationsroute bildende Kommunikationsleitung von der gegenwärtig genutzten Kommunikationsleitung auf die Sicherungskommunikationsleitung schaltet, wenn ein Zustand, in welchem die Hauptstationseinrichtung (1) das Signal von keiner der Nebenstationseinrichtungen (10) mit Ausnahme der Nebenstationseinrichtung, die durch die Energiespareinrichtungsidentifikationseinheit (24) als sich im Energiesparmodus befindend identifiziert wurde, unter den Nebenstationseinrichtungen, (10) empfängt, für eine vorherbestimmte Zeit andauert.

2. Kommunikationssystem nach Anspruch 1, wobei jede der Nebenstationseinrichtungen (10) im Energiesparmodus eine Empfangszustandsverwaltungseinheit enthält, die einen Steuersignalempfangszustand der Haupteinrichtung verwaltet, in welchem die Hauptstationseinrichtung (1) ein an die Hauptstationseinrichtung (1) übertragenes Steuersignal zu einem Intervall einer Zeit empfängt, das gesetzt ist, um der Stoppzeitdauer zugeordnet zu werden, und
die Leitungsschalteinheit (25-1) die die Kommunikationsroute bildende Kommunikationsleitung von der gegenwärtig genutzten Kommunikationsleitung auf die Sicherungskommunikationsleitung schaltet auf Grundlage eines Verwaltungsergebnisses der Empfangszustandsverwaltungseinheit.

3. Kommunikationssystem nach Anspruch 2, wobei jede der Nebenstationseinrichtungen (10) im Energiesparmodus das Steuersignal an die Hauptstationseinrichtung (1) zu einem Zeitintervall gleich wie oder kürzer als eine Zeit, die erforderlich ist, um die Kommunikationsleitung von der gegenwärtig genutzten Kommunikationsleitung auf die Sicherungskommunikationsleitung zu schalten, überträgt.

4. Kommunikationssystem nach einem der Ansprüche 1 bis 3, wobei
die Sicherungskommunikationsleitung durch eine Vielzahl von Kommunikationsleitungen gebildet ist, und
die Leitungsschalteinheit (25-1) Schalten ausführt durch Auswählen einer der Kommunikationsleitungen, die die Sicherungskommunikationsleitungen bilden, und durch Schalten der Kommunikationsleitung, die genutzt wird, um mit den Nebenstationseinrichtungen (10) zu kommunizieren, von der gegenwärtig genutzten Kommunikationsleitung auf die ausgewählte Kommunikationsleitung.

5. Kommunikationsleitungsschaltverfahren, das auf ein Kommunikationssystem anwendbar ist, das eine Hauptstationseinrichtung (1) und eine Vielzahl von Nebenstationseinrichtungen (10) enthält, die durch eine gegenwärtig genutzte Kommunikationsleitung und eine Sicherungskommunikationsleitung miteinander verbunden sind, wobei eine Kommunikationsroute zwischen der Hauptstationseinrichtung (1) und den Nebenstationseinrichtungen (10) gebildet ist durch selektives Nutzen dieser Kommunikationsleitungen, wobei das Kommunikationssystem jede der Nebenstationseinrichtungen (10) veranlasst, Übertragen eines Signals an die Hauptstationseinrichtung (1) für eine vorherbestimmte Stoppzeitdauer zu stoppen, wenn die Nebenstationseinrichtung in einem Energiesparmodus ist, und jede der Nebenstationseinrichtungen (10) veranlasst, das Signal an die Hauptstationseinrichtung (1) zu übertragen, wenn die Nebenstationseinrichtung in einem Normalmodus ist, wobei das Kommunikationsleitungsschaltverfahren umfasst:
einen Energiespareinrichtungsidentifizierungsschritt des Identifizierens jeder der Nebenstationseinrichtungen (10) im Energiesparmodus; und
einen Leitungsschaltschritt des Schaltens der die Kommunikationsroute bildenden Kommunikationsleitung von der gegenwärtig genutzten Kommunikationsleitung auf die Sicherungskommunikationsleitung auf Grundlage eines Identifikationsergebnisses beim Energiespareinrichtungsidentifizierungsschritt, wenn ein Zustand, in welchem die Hauptstationseinrichtung (1) das Signal über die gegenwärtig genutzte Kommunikationsleitung nicht empfängt, für eine vorherbestimmte Zeit andauert.

6. Kommunikationsleitungsschaltverfahren nach Anspruch 5, umfassend:
einen Steuersignalübertragungsschritt des Veranlassens jeder der Nebenstationseinrichtungen (10) im Energiesparmodus ein Steuersignal an die Hauptstationseinrichtung (1) zu einem Intervall einer vorherbestimmten Zeit zu übertragen; und
einen Empfangszustandsverwaltungsschritt des Veranlassens der Hauptstationseinrichtung (1), einen Steuersignalempfangszustand für das im Steuersignalübertragungsschritt an die Hauptstationseinrichtung (1) übertragene Steuersignal zu verwalten, wobei
im Leitungsschaltschritt die die Kommunikationsroute bildende Kommunikationsleitung von der gegenwärtig genutzten Kommunikationsleitung auf die Sicherungskommunikationsleitung geschaltet wird auf Grundlage eines Verwaltungsergebnisses beim Empfangszustandsverwaltungsschritt.

7. Kommunikationsleitungsschaltverfahren nach Anspruch 6, wobei beim Steuersignalübertragungsschritt jede der Nebenstationseinrichtungen (10) im Energiesparmodus das Steuersignal an die Hauptstationseinrichtung (1) überträgt zu einem Intervall von einer Zeit gleich wie oder kürzer als eine Zeit, die erforderlich ist, um die Kommunikationsleitung von der gegenwärtig genutzten Kommunikationsleitung auf die Sicherungskommunikationsleitung zu schalten.

8. Hauptstationseinrichtung (1), die auf ein Kommunikationssystem anwendbar ist, das die Hauptstationseinrichtung (1) und eine Vielzahl von Nebenstationseinrichtungen (10) enthält, die über eine gegenwärtig genutzte Kommunikationsleitung und eine Sicherungskommunikationsleitung miteinander verbunden sind, wobei eine Kommunikationsroute zwischen der Hauptstationseinrichtung (1) und den Nebenstationseinrichtungen (10) gebildet ist durch selektives Nutzen dieser Kommunikationsleitungen, wobei das Kommunikationssystem jede der Nebenstationseinrichtungen (10) veranlasst, Übertragen eines Signals an die Hauptstationseinrichtung (1) für eine vorherbestimmte Stoppzeitdauer, wenn die Nebenstationseinrichtung in einem Energiesparmodus ist, zu stoppen, und jede der Nebenstationseinrichtungen (10) veranlasst, das Signal an die Hauptstationseinrichtung (1) zu übertragen, wenn die Nebenstationseinrichtung in einem Normalmodus ist, wobei die Hauptstationseinrichtung (1) umfasst:
eine Energiespareinrichtungsidentifikationseinheit (24), die jede der Nebenstationseinrichtungen (10) im Energiesparmodus identifiziert; und
eine Leitungsschalteinheit (25-1), die die Kommunikationsroute bildende Kommunikationsleitung von der gegenwärtig genutzten Kommunikationsleitung auf die Sicherungskommunikationsleitung schaltet, wenn ein Zustand, in welchem die Hauptstationseinrichtung (1) das Signal von keiner der Nebenstationseinrichtungen (10) mit Ausnahme der Nebenstationseinrichtung, die durch die Energiespareinrichtungsidentifikationseinheit (24) als sich im Energiesparmodus befindend identifiziert wurde, unter den Nebenstationseinrichtungen, (10) empfängt, für eine vorherbestimmte Zeit andauert.

## Revendications

1. Système de communication comprenant un dispositif de station maître (1) et une pluralité de dispositifs de station esclaves (10) reliés les uns aux autres par une ligne de communication en cours d'utilisation et une ligne de communication de secours, un chemin de communication étant formé entre le dispositif de station maître (1) et les dispositifs de station esclaves (10) par utilisation sélective de ces lignes de communication, pour amener chacun des dispositifs de station esclaves (10) à cesser de transmettre un signal au dispositif de station maître (1) pendant un laps de temps d'arrêt prédéterminé lorsque le dispositif de station esclave est dans un mode d'économie d'énergie, et pour amener chacun des dispositifs de station esclaves (10) à transmettre le signal au dispositif de station maître (1) lorsque le dispositif de station esclave est dans un mode normal, le système de communication comprenant :
une unité d'identification de dispositif d'économie d'énergie (24) qui identifie chacun des dispositifs de station esclaves (10) dans le mode d'économie d'énergie ; et
une unité de commutation de ligne (25-1) qui commute la ligne de communication formant le chemin de communication de la ligne de communication en cours d'utilisation vers la ligne de communication de secours lorsqu'un état où le dispositif de station maître (1) ne reçoit le signal d'aucun des dispositifs de station esclaves (10) sauf du dispositif de station esclave identifié par l'unité d'identification de dispositif d'économie d'énergie (24) comme étant dans le mode d'économie d'énergie parmi les dispositifs de station esclaves (10) se prolonge pendant une durée prédéterminée.

2. Système de communication selon la revendication 1, dans lequel
chacun des dispositifs de station esclaves (10) dans le mode d'économie d'énergie comprend une unité de gestion d'état de réception qui gère un état de réception de signal de commande de la station maître dans lequel le dispositif de station maître (1) reçoit un signal de commande transmis au dispositif de station maître (1) à un intervalle d'une durée fixée de manière à être associée au laps de temps d'arrêt, et
l'unité de commutation de ligne (25-1) commute la ligne de communication formant le chemin de communication de la ligne de communication en cours d'utilisation vers la ligne de communication de secours en fonction d'un résultat de gestion de l'unité de gestion d'état de réception.

3. Système de communication selon la revendication 2, dans lequel
chacun des dispositifs de station esclaves (10) dans le mode d'économie d'énergie transmet le signal de commande au dispositif de station maître (1) à un intervalle d'une durée inférieure ou égale à un temps nécessaire pour commuter la ligne de communication de la ligne de communication en cours d'utilisation vers la ligne de communication de secours.

4. Système de communication selon l'une quelconque des revendications 1 à 3, dans lequel
la ligne de communication de secours est constituée d'une pluralité de lignes de communication, et
l'unité de commutation de ligne (25-1) exécute la commutation en sélectionnant l'une des lignes de communication constituant la ligne de communication de secours et en commutant la ligne de communication utilisée pour communiquer avec les dispositifs de station esclaves (10) de la ligne de communication en cours d'utilisation vers la ligne de communication sélectionnée.

5. Procédé de commutation de lignes de communication applicable à un système de communication comprenant un dispositif de station maître (1) et une pluralité de dispositifs de station esclaves (10) reliés les uns aux autres par une ligne de communication en cours d'utilisation et une ligne de communication de secours, un chemin de communication étant formé entre le dispositif de station maître (1) et les dispositifs de station esclaves (10) par utilisation sélective de ces lignes de communication, le système de communication amenant chacun des dispositifs de station esclaves (10) à cesser de transmettre un signal au dispositif de station maître (1) pendant un laps de temps d'arrêt prédéterminé lorsque le dispositif de station esclave est dans un mode d'économie d'énergie, et amenant chacun des dispositifs de station esclaves (10) à transmettre le signal au dispositif de station maître (1) lorsque le dispositif de station esclave est dans un mode normal, le procédé de commutation de lignes de communication comprenant :
une étape d'identification de dispositif d'économie d'énergie qui consiste à identifier chacun des dispositifs de station esclaves (10) dans le mode d'économie d'énergie ; et
une étape de commutation de ligne qui consiste à commuter la ligne de communication formant le chemin de communication de la ligne de communication en cours d'utilisation vers la ligne de communication de secours en fonction d'un résultat d'identification à l'étape d'identification de dispositif d'économie d'énergie lorsqu'un état où le dispositif de station maître (1) ne reçoit pas le signal via la ligne de communication en cours d'utilisation se prolonge pendant une durée prédéterminée.

6. Procédé de commutation de lignes de communication selon la revendication 5, comprenant :
une étape de transmission de signal de commande qui consiste à amener chacun des dispositifs de station esclaves (10) dans le mode d'économie d'énergie à transmettre un signal de commande au dispositif de station maître (1) à un intervalle d'un temps prédéterminé ; et
une étape de gestion d'état de réception qui consiste à amener le dispositif de station maître (1) à gérer un état de réception de signal de commande pour le signal de commande transmis au dispositif de station maître (1) à l'étape de transmission de signal de commande, dans lequel
à l'étape de commutation de ligne, la ligne de communication formant le chemin de communication est commutée de la ligne de communication en cours d'utilisation vers la ligne de communication de secours en fonction d'un résultat de gestion à l'étape de gestion d'état de réception.

7. Procédé de commutation de lignes de communication selon la revendication 6, dans lequel à l'étape de transmission de signal de commande, chacun des dispositifs de station esclaves (10) dans le mode d'économie d'énergie transmet le signal de commande au dispositif de station maître (1) à un intervalle d'une durée inférieure ou égale à un temps nécessaire pour commuter la ligne de communication de la ligne de communication en cours d'utilisation vers la ligne de communication de secours.

8. Dispositif de station maître (1) applicable à un système de communication comprenant le dispositif de station maître (1) et une pluralité de dispositifs de station esclaves (10) reliés les uns aux autres par une ligne de communication en cours d'utilisation et une ligne de communication de secours, un chemin de communication étant formé entre le dispositif de station maître (1) et les dispositifs de station esclaves (10) par utilisation sélective de ces lignes de communication, le système de communication amenant chacun des dispositifs de station esclaves (10) à cesser de transmettre un signal au dispositif de station maître (1) pendant un laps de temps d'arrêt prédéterminé lorsque le dispositif de station esclave est dans un mode d'économie d'énergie, et amenant chacun des dispositifs de station esclaves (10) à transmettre le signal au dispositif de station maître (1) lorsque le dispositif de station esclave est dans un mode normal, le dispositif de station maître (1) comprenant :
une unité d'identification de dispositif d'économie d'énergie (24) qui identifie chacun des dispositifs de station esclaves (10) dans le mode d'économie d'énergie ; et
une unité de commutation de ligne (25-1) qui commute la ligne de communication formant le chemin de communication de la ligne de communication en cours d'utilisation vers la ligne de communication de secours lorsqu'un état où le dispositif de station maître (1) ne reçoit le signal d'aucun des dispositifs de station esclaves (10) sauf du dispositif de station esclave identifié par l'unité d'identification de dispositif d'économie d'énergie (24) comme étant dans le mode d'économie d'énergie parmi les dispositifs de station esclaves (10) se prolonge pendant une durée prédéterminée.
